(19) **Europäisches Patentamt European Patent Office Office européen des brevets**

(11) **EP 4 535 386 A1**

(12) **EUROPEAN PATENT APPLICATION**
published in accordance with Art. 153(4) EPC

(43) Date of publication:
09.04.2025 Bulletin 2025/15

(21) Application number: 23816001.4

(22) Date of filing: 29.05.2023

(51) International Patent Classification (IPC):
$H01G\ 9/035^{(2006.01)}$    $H01G\ 9/052^{(2006.01)}$
$H01G\ 9/145^{(2006.01)}$

(52) Cooperative Patent Classification (CPC):
H01G 9/035; H01G 9/052; H01G 9/145

(86) International application number:
PCT/JP2023/019881

(87) International publication number:
WO 2023/234244 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.06.2022 PCT/JP2022/022431

(71) Applicants:
• Rubycon Corporation
Ina-shi
Nagano 399-4593 (JP)
• Yoko-Toyo Metals Co., Ltd.
Tokyo 104-0043 (JP)

(72) Inventors:
• NAKAJIMA, Yohei
Ina-shi, Nagano 399-4593 (JP)
• KANEKO, Tsutomu
Ina-shi, Nagano 399-4593 (JP)
• SAKURAI, Yoshishige
Ina-shi, Nagano 399-4593 (JP)
• NOZAWA, Takashi
Ina-shi, Nagano 399-4593 (JP)

(74) Representative: Winter, Brandl - Partnerschaft mbB
Alois-Steinecker-Straße 22
85354 Freising (DE)

(54) **ELECTROLYTIC CAPACITOR AND METHOD FOR PRODUCING ELECTROLYTIC CAPACITOR**

(57) A problem is to provide an electrolytic capacitor in which a sintered foil having a metal sintered material at least on a surface thereof is applied as an electrode foil and which can stably exhibit a relatively high capacitance specific to the sintered foil and to provide a production method thereof. As a solution, the electrolytic capacitor (1) according to the invention is an electrolytic capacitor having a capacitor element (2) having an anode foil (8) having a dielectric layer formed thereon, a cathode foil (9) and a separator (10) placed between the anode foil (8) and the cathode foil (9) and an electrolytic solution (3) impregnated in the capacitor element (2). The anode foil (8) or the cathode foil (9) is obtained by forming a sintered material of a composition containing a metal powder in a foil form (is composed of a foil-form sintered material (8c)) or forming a sintered material film (8b) composed of the sintered material on a surface of a base material, and the viscosity $\mu$ [cP] of the electrolytic solution (3) at 25 [°C] is 400 [cP] or less.

FIG.2B

EP 4 535 386 A1

**Description**

Technical Field

The present invention relates to an electrolytic capacitor and a method for producing an electrolytic capacitor.

Background Art

An electrolytic capacitor in which an electrolytic solution is impregnated in a capacitor element having a separator placed between an anode foil having an oxide film or the like as a dielectric layer formed thereon and a cathode foil is known.

To increase the capacity of an electrolytic capacitor, a metal foil having a specific surface area increased by surface-enlarging treatment has been used for an electrode foil. The surface-enlarging treatment is generally conducted by forming many pores on the surface of the metal foil by electrochemical etching treatment (a metal foil which has been subjected to etching treatment is sometimes referred to as "etching foil" below). However, there is a limit to the increase in the specific surface area by the etching treatment, and it is becoming impossible to meet the growing demand for an increase in the capacity. Moreover, the etching treatment has drawbacks of use of a chemical which poses relatively large environmental load or economic burden, such as hydrochloric acid, and a decrease in the foil strength caused by electrochemical dissolution of the metal foil.

Considering these points, PTL 1 (JP-A-2008-98279) describes a surface-enlarging treatment method for increasing the specific surface area by applying a composition containing a metal powder (aluminum powder in the document) on a surface of a base material (an aluminum foil in the document) and sintering by heating to form a sintered material film (a foil having a metal sintered material at least on the surface thereof is sometimes referred to as "sintered foil" below).

Citation List

Patent Literature

PTL 1: JP-A-2008-98279

Summary of Invention

Technical Problem

According to the sintered foil shown as an example in PTL 1, the environmental load and the economic burden can be reduced, compared to those of the conventional etching foils. Moreover, the decrease in the foil strength during the production process can be prevented, and a relatively high capacitance can be achieved by adjusting the particle size of the powder particles of the metal powder or the sintered particles thereof, the thickness of the sintered material film or the like. Depending on the features of the electrolytic solution, however, in some cases, the capacitance is not stable and cannot be exhibited sufficiently.

Solution to Problem

The invention has been made considering the circumstances and aims to provide an electrolytic capacitor in which a sintered foil having a metal sintered material at least on a surface thereof is applied as an electrode foil and which can stably exhibit a relatively high capacitance specific to the sintered foil and to provide a production method thereof.

The invention solves the problem with the solution described below as an embodiment.

The electrolytic capacitor according to the invention is an electrolytic capacitor having a capacitor element having an anode foil having a dielectric layer formed thereon, a cathode foil and a separator placed between the anode foil and the cathode foil and an electrolytic solution impregnated in the capacitor element and is characterized in that the anode foil or the cathode foil is obtained by forming a sintered material of a composition containing a metal powder in a foil form or forming a sintered material film composed of the sintered material on a surface of a base material and that the viscosity $\mu$ [cP] of the electrolytic solution at 25 [°C] is 400 [cP] or less.

Moreover, the method for producing an electrolytic capacitor according to the invention is a method for producing an electrolytic capacitor having a capacitor element having an anode foil having a dielectric layer formed thereon, a cathode foil and a separator placed between the anode foil and the cathode foil and an electrolytic solution impregnated in the capacitor element and is characterized in that at least one of the anode foil and the cathode foil is configured by forming a sintered material of a composition containing a metal powder in a foil form or configured by forming a sintered material film composed of the sintered material on a surface of a base material and that the viscosity $\mu$ [cP] of the electrolytic solution at 25 [°C] is adjusted to 400 [cP] or less.

According to this, the feature (viscosity $\mu$) of the electrolytic solution is configured in an appropriate state in relation to the sintered foil, and thus a relatively high capacitance specific to the sintered foil can be exhibited stably.

The particle size D [$\mu$m] of the powder particles of the metal powder or the sintered particles of the metal powder of the electrolytic capacitor according to the invention is preferably 5.0 [$\mu$m] or less. Moreover, in the method for producing an electrolytic capacitor according to the invention, the particle size D [$\mu$m] of the powder particles of the metal powder or the sintered particles of the metal powder is preferably adjusted to 5.0 [$\mu$m] or less. Here, the particle size D means the median diameter at a cumulative value of 50 [%] in a particle size distribution based on volume of the powder particles measured by the laser diffraction-scattering method or the sintered particles measured by observation with a scanning electron microscope. Regarding the particle size distribution of the sintered particles, the particle size distribution based on volume is calculated from the particle size distribution based on number.

According to this, by increasing the specific surface area with fine sintered particles, a higher capacitance can be achieved. Moreover, such a high capacitance can be exhibited stably.

The viscosity $\mu$ [cP] of the electrolytic solution at 25 [°C] of the electrolytic capacitor according to the invention more preferably further satisfies the expression (1) below.

$$\mu \leq 9.438D + 227 \quad \cdots(1)$$

Moreover, in the method for producing an electrolytic capacitor according to the invention, the viscosity $\mu$ [cP] of the electrolytic solution at 25 [°C] is more preferably adjusted to further satisfy the expression (1) below.

$$\mu \leq 9.438D + 227 \quad \cdots(1)$$

Here, D in the expression (1) above means the particle size D [$\mu$m] of the powder particles of the metal powder or the sintered particles of the metal powder, and the particle size D means the median diameter at a cumulative value of 50 [%] in a particle size distribution based on volume of the powder particles measured by the laser diffraction-scattering method or the sintered particles measured by observation with a scanning electron microscope. Regarding the particle size distribution of the sintered particles, the particle size distribution based on volume is calculated from the particle size distribution based on number.

According to this, for example, despite deterioration with time (an increase in the viscosity $\mu$) or the like due to use of the electrolytic capacitor, the high capacitance specific to the sintered foil can be exhibited stably over a long time almost without a decrease.

Advantageous Effects of Invention

According to the invention, in an electrolytic capacitor in which a sintered foil is applied, the relatively high capacitance specific to the sintered foil can be exhibited stably.

Brief Description of Drawings

Fig. 1 is a schematic view (front sectional view) illustrating an example of the electrolytic capacitor according to the embodiment.

Fig. 2A is an explanatory figure explaining an example of the capacitor element in the electrolytic capacitor according to the embodiment. Fig. 2B is an explanatory figure explaining another example of the capacitor element in the electrolytic capacitor according to an embodiment of the invention.

Figs. 3A and 3B are explanatory figures explaining an example of the method for producing an electrolytic capacitor according to the embodiment. Fig. 3A is a general view of the capacitor element illustrated in Fig. 2A. Fig. 3B is a partial view illustrating a part of the capacitor element illustrated in Fig. 3A in more detail.

Fig. 4 is a graph of the capacity appearance rates (A) in Table 1.

Fig. 5A is a graph of the capacity appearance rate changes (C) with an increase in the viscosity by 10 [%] in Table 2. Fig. 5B is a graph in which approximate straight lines are drawn in the scatter plot of Fig. 5A.

Fig. 6A is a graph in which an approximate straight line is drawn in a scatter plot showing the relationship between the particle size D of the sintered particles (powder particles) of the sintered foil and the subcritical viscosity value. Fig. 6B is a graph in which an approximate straight line is drawn in a scatter plot showing the relationship between the particle size D of the sintered particles (powder particles) of the sintered foil and the critical viscosity value.

Fig. 7A is a graph of the electrolytic solution-retaining amounts in Table 3. Fig. 7B is a graph of the electrolytic solution retention rates based on the stable retention amounts in Table 4.

Fig. 8A is a graph of the capacitances in Table 5. Fig. 8B is a graph of the capacitance decrease rates based on the stable capacities in Table 6.

Fig. 9A is a graph obtained by plotting the calculated values of the relational expression between the value of the particle size D and the value of the viscosity $\mu$: $(1/(D\mu^2))$ in Table 6 on the horizontal axis on a log scale and the values of the decrease rate R corresponding to the D values and the $\mu$ values on the vertical axis on a log scale. Fig. 9B is a graph showing the regression line calculated in Fig. 9A.

Description of Embodiments

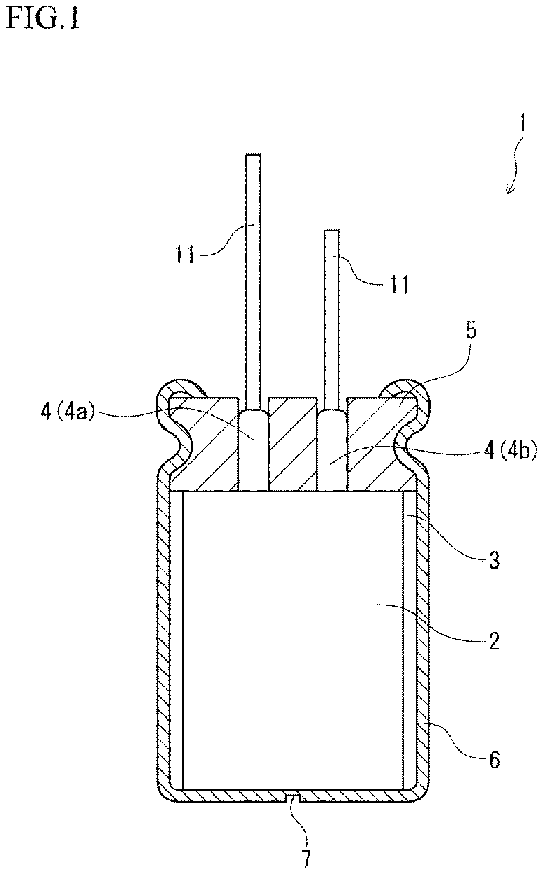

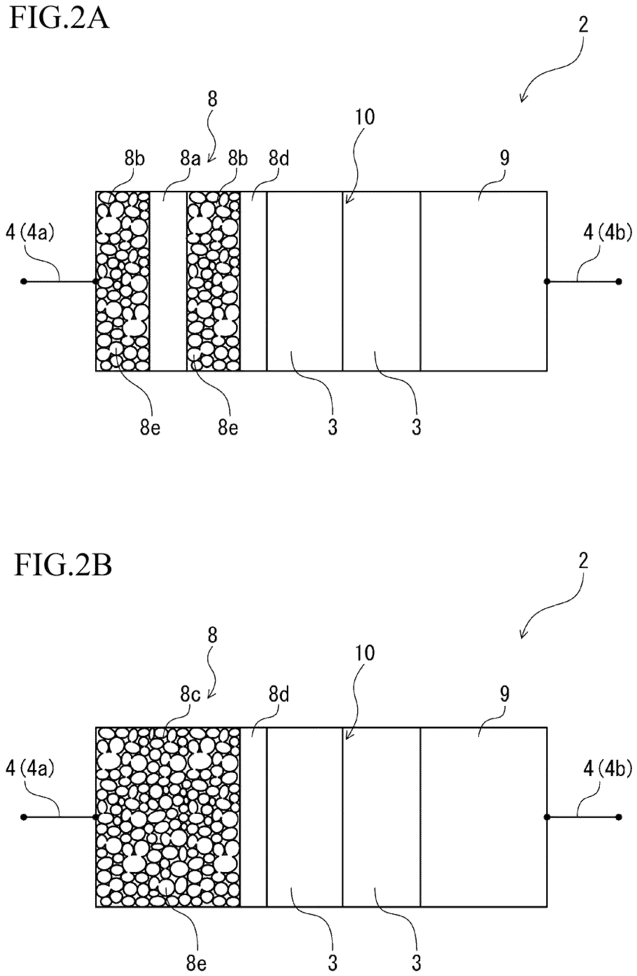

Embodiments for carrying out the invention are explained in detail below referring to the drawings. Fig. 1 is a schematic view (front sectional view) illustrating an example of an electrolytic capacitor 1 according to the embodiment. Fig. 2A is an explanatory figure explaining an example of a capacitor element 2 in the electrolytic capacitor 1 according to the embodiment. Fig. 2B is an explanatory figure explaining another example of the capacitor element 2. Fig. 2A and Fig. 2B each schematically illustrate an example of the basic structure of the capacitor element 2. A winding-type electrolytic capacitor 1 is explained below as an example as an embodiment, but the electrolytic capacitor 1 is not limited to the embodiment and may be, for example, a lamination type, a coin type or the like. Moreover, although an aluminum electrolytic capacitor 1 having an anode foil 8 which is composed of an electrode material containing aluminum or an aluminum alloy as a main material and which has an oxide film 8d as a dielectric layer is explained as an example as an embodiment, the electrolytic capacitor 1 is not limited to the embodiment, and for example, a valve metal other than aluminum or an alloy thereof may be the main material.

In the electrolytic capacitor 1 according to the embodiment, the capacitor element 2 is housed in an external material 6 as illustrated in Fig. 1. The opening of the external material 6 is sealed with a sealant material 5, and the opening edge of the external material 6 is swaged to the sealant material 5 and tightly closed. Lead terminals 4 (an anode terminal 4a and a cathode terminal 4b) are caused to go through two holes made in the sealant material 5, and lead wires 11 are extracted from the electrolytic capacitor 1. Here, an explosion-proof valve 7, which is a pressure valve, is provided as a safety valve in the external material 6, and the explosion-proof valve 7 operates (opens) when the internal pressure of the electrolytic capacitor 1 reaches a certain pressure or more to release the gas in the electrolytic capacitor 1 and prevent explosion. The number and the position of the explosion-proof valve(s) 7 are not limited, and the explosion-proof valve(s) 7 may be provided in the sealant material 5 or provided both in the external material 6 and the sealant material 5.

Next, the capacitor element 2 according to the embodiment has the anode foil 8, a cathode foil 9 and a separator 10 placed between the anode foil 8 and the cathode foil 9 as illustrated in Fig. 2A. Here, the anode terminal 4a and the cathode terminal 4b are attached to the anode foil 8 and the cathode foil 9, respectively.

The electrode foils (the anode foil 8 and the cathode foil 9) are composed of an electrode material containing a valve metal such as aluminum and tantalum or an alloy thereof as a main material and optionally further have a base material 8a which supports the electrode materials. The main material of the base material 8a is not particularly limited, but a valve metal such as aluminum and tantalum or an alloy thereof can also be used for the base material 8a. Here, that a material is a "main material" means that inclusion of a trace amount of impurities is allowed as described below.

The electrode materials according to the embodiment contain aluminum or an aluminum alloy as a main material. The aluminum or the aluminum in the aluminum alloy preferably has a purity of 99.80 [mass %] or more to prevent defects caused by impurities, and the purity is preferably 99.99 [mass%] or more to suppress an increase in the leakage current in response to a high-temperature load. As the aluminum alloy, for example, an alloy containing one kind or two or more kinds of elements such as silicon, iron, copper, manganese, magnesium, chromium, zinc, titanium, vanadium, gallium, nickel, boron and zirconium can be used. In this case, the amounts of the elements are each preferably 100 [mass ppm] or less, particularly preferably 50 [mass ppm] or less.

Regarding the electrode foils 8, 9 according to the embodiment, the anode foil 8 is formed as a sintered foil, and the cathode foil 9 is formed as an etching foil. Both of the foils have an enlarged surface structure on the surfaces. The sintered foil of the anode foil 8 is a foil having a metal sintered material at least on a surface thereof. The cathode foil 9 is configured by subjecting an aluminum foil as an electrode material to etching treatment as an example, but the cathode foil 9 may also be formed as a sintered foil. Here, the etching treatment may be conducted by direct current electrolysis, alternate current electrolysis or the like. For example, in the direct current electrolysis, the etching treatment can be conducted by treating in a mixed aqueous solution of hydrochloric acid and sulfuric acid (hydrochloric acid: 1 [mol/L] and sulfuric acid: 3 [mol/L]) at 80 [°C] at a direct current of 500 [mA/cm$^2$] for one [minute] and then treating in an aqueous nitric acid solution (nitric acid: 1 [mol/L]) at 75 [°C] at a direct current of 100 [mA/cm$^2$] for five [minutes].

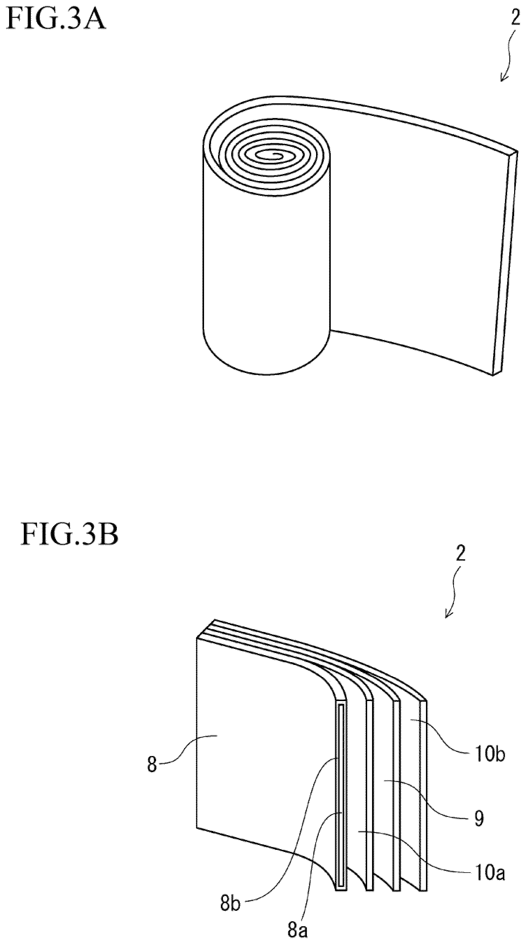

On the other hand, the sintered foil can be formed by a method of applying a composition containing at least aluminum powder on a surface of an aluminum foil as the base material 8a and sintering by heating, for example. In this manner, as illustrated in Fig. 2A, a sintered foil in which a sintered material film 8b composed of a sintered material of the composition containing aluminum powder is formed on the surface of the aluminum foil can be formed. In this regard, however, the sintered material film 8b as the electrode material is formed at least on the surface of the aluminum foil as the base material 8a which faces the cathode foil 9 and does not have to be formed on both surfaces of the aluminum foil (namely the entire surface of the aluminum foil as illustrated in Fig. 3B) as illustrated in Fig. 2A. Accordingly, the "surface of the base material" in the claims sometimes means one surface of the base material 8a. Moreover, the materials (main materials) of the base material 8a and the sintered material film 8b do not have to be the same. For example, the sintered material film 8b composed of a sintered material of a composition containing aluminum alloy powder may be formed on a surface of the aluminum foil as the base material 8a.

Moreover, as another example, the sintered foil can also be formed by a method of sintering a composition containing at least aluminum powder by heating without using the base material 8a and forming in a foil form before or after sintering. In this manner, a sintered foil composed of a foil-form sintered material 8c obtained by forming a sintered material of the composition containing aluminum powder in a foil form can be formed as illustrated in Fig. 2B.

The sintered material film 8b and the foil-form sintered material 8c have been sintered while the powder particles of the aluminum or aluminum alloy powder keep space from each other as illustrated in Fig. 2A and Fig. 2B. This means a porous sintered material with a three-dimensional mesh structure formed while the sintered particles 8e are connected with space. The sintered foil has an enlarged surface structure having a larger specific surface area than that of an etching foil on the surface, depending on the particle size D of the powder particles or the sintered particles 8e, the thickness of the sintered material film 8b, the porosity or the like. As a result, the electrolytic capacitor 1 according to the embodiment can achieve a capacitance which is higher than that of an electrolytic capacitor in which an etching foil is applied. In this regard, however, the sintered foil in Fig. 2A and Fig. 2B may be subjected to etching treatment to further enlarge the surface.

Here, for example, in general, as the particle size D of the powder particles of the aluminum powder or the sintered particles 8e thereof becomes smaller, the specific surface area increases, and the capacitance of the sintered foil becomes higher. Thus, the particle size D of the powder particles of the aluminum powder or the sintered particles 8e of the aluminum powder is preferably 5.0 [$\mu$m] or less for example, and more preferably 3.0 [$\mu$m] or less.

Here, the particle size D in this application is a value with unit [$\mu$m] which is defined as follows (the same applies to all the "particle sizes D" irrespective of whether the definition is described). The particle size D [$\mu$m] of the powder particles means the median diameter ($D_{50}$) at a cumulative frequency of 50 [%] in a particle size distribution based on volume of the powder particles measured by the laser diffraction-scattering method. Moreover, the particle size D [$\mu$m] of the sintered particles 8e means the median diameter ($D_{50}$) at a cumulative frequency of 50 [%] in a particle size distribution based on volume of the sintered particles 8e measured by observing the surface or the section of the sintered material film 8b or the foil-form sintered material 8c with a scanning electron microscope. The observed sintered particles 8e are measured using the diameters as the particle sizes. In this regard, however, the sintered particles 8e are sometimes in the state in which the sintered powder particles are melted and in which the shapes are partially lost or in the state in which the sintered powder particles are partially connected. In the case, a part having an approximately circular shape is considered as one sintered particle 8e for approximation, and the maximum diameter thereof is measured as the particle size. Parts which are difficult to identify as approximately circular shapes are excluded. The particle sizes of a predetermined number of sintered particles 8e are measured, and the particle size distribution based on volume is calculated from the particle size distribution based on number. Then, the median diameter ($D_{50}$) at a cumulative frequency of 50 [%] in the particle size distribution is obtained as the particle size D [$\mu$m] of the sintered particles 8e. Here, the particle size D of the metal powder rarely changes during sintering, and the particle size D [$\mu$m] of the powder particles determined by the above method is substantially the same as the particle size D [$\mu$m] of the sintered particles 8e of the powder particles. That is, that the particle size D in this application is defined as "the particle size D of the powder particles of the metal powder or the sintered particles 8e of the metal powder" intends that the particle size D may be measured using either the powder particles before sintering or the sintered particles 8e after sintering as a sample.

When the sintered foil is formed, the composition containing aluminum or aluminum alloy powder may contain an additive such as a binder, a solvent, a sintering additive and a surfactant according to the need. Known products or commercial products can be appropriately used as the additives. For example, as the binder, a synthetic resin such as carboxy-modified polyolefin resin, vinyl chloride resin, vinyl acetate resin, vinyl chloride-vinyl acetate copolymer resin, vinyl alcohol resin, butyral resin, vinyl fluoride resin, acrylic resin, polyester resin, urethane resin, epoxy resin, urea resin, phenolic resin, acrylonitrile resin, nitrocellulose resin, paraffin wax and polyethylene wax, a natural resin such as wax, tar (dry distilled liquid), glue, lacquer, pine resin and beeswax or the like can be used. Moreover, for example, as the solvent, water as well as an organic solvent such as ethanol, toluene, ketones and esters can be used. Of the additives, when a binder and/or a solvent is contained for example, the composition containing aluminum or aluminum alloy powder has formability and shape-retaining property, and the sintered material film 8b and the foil-form sintered material 8c can be formed into optimum thicknesses. By adjusting the kinds and the amounts of the additives, the porosities of the sintered material film 8b and the foil-form sintered material 8c and the degrees of remaining additives can be adjusted. In this manner, the capacitance of the electrolytic capacitor 1 can be adjusted.

The condition for sintering the composition is not limited but is preferably set in the range of 560 [°C] or higher and 660 [°C] or lower for around five [hours] to 24 [hours] for example. The sintering atmosphere may be any of vacuum, atmosphere of an inert gas such as argon gas, atmospheric atmosphere, oxidizing atmosphere, reducing atmosphere and the like. The pressure environment may also be any of normal pressure, reduced pressure and increased pressure.

When an organic additive such as an organic binder is contained in the composition, heating at 100 [°C] or higher and 600 [°C] or lower for five [hours] or longer is preferably conducted in advance before sintering, for example. Through such pretreatment (sometimes called "degreasing treatment") and the sintering treatment, the organic additive can be evaporated so that almost no organic additive remains.

On the surface of the anode foil 8 which is formed as the sintered foil above, the oxide film 8d as a dielectric layer is formed through chemical conversion treatment. The chemical conversion treatment may be conducted by anodic oxidation treatment by immersing a subject metal as an anode in a chemical conversion solution tank and applying voltage in this state to form the oxide film 8d or by treatment by simply immersing a subject metal in a chemical conversion solution tank, for example. For example, in the anodic oxidation treatment, the oxide film 8d can be formed by treating in an aqueous boric acid solution (boric acid: 0.01 [mol/L] or more and 5 [mol/L] or less) at 30 [°C] or higher and 100 [°C] or lower at a direct current of 10 [mA/cm$^2$] or more and 400 [mA/cm$^2$] or less for five [minutes] or longer. On the other hand, in the electrolytic capacitor 1 with polarity according to the embodiment, the cathode foil 9 is not basically subjected to chemical conversion treatment, but a natural oxide film (not illustrated) is formed on the surface of the cathode foil 9 due to the oxygen in the air.

The structure of the separator 10, which is placed between the anode foil 8 and the cathode foil 9 and which divides the foils, is not particularly limited, but for example, paper composed of natural cellulose fiber such as Manila hemp pulp or a cloth, a sheet, a film or the like formed with synthetic fiber such as nylon can be applied. Moreover, mixed paper, a blended spinning product or the like of natural fiber and synthetic fiber may also be applied. Here, although Fig. 2 schematically illustrates an example of the basic structure of the capacitor element 2 and illustrates one separator 10, the number thereof is not limited in practice, and for example, two pieces (a first separator 10a and a second separator 10b) may be provided as illustrated in Fig. 3B.

An electrolytic solution 3 is impregnated in the capacitor element 2. The electrolytic solution 3 is contained in the space between the electrode foils 8, 9, and depending on the structure and the material of the separator 10, a part of the electrolytic solution 3 is impregnated also in the separator 10. The electrolytic solution 3 is configured in such a manner that the electrolytic solution 3 is in contact with the dielectric layer (the oxide film 8d) formed on the anode foil 8 and substantially functions as the true cathode as a counter electrode of the anode foil 8. The electrolytic solution 3, however, does not have to completely fill between the electrode foils 8, 9 in the range in which the function can be exhibited, and an area which is not filled with the electrolytic solution 3 may be included between the electrode foils 8, 9.

The electrolytic solution 3 is a liquid component having fluidity. The electrolytic solution 3 contains a solvent and a solute as an electrolyte and further contains a predetermined additive. As the solvent, a solvent composed of an organic solvent alone, a water-organic solvent-based solvent obtained by adding a predetermined amount of water to an organic solvent as the main solvent or the like can be applied. According to the water-organic solvent-based solvent, the ability of dissolving the electrolyte and the ion mobility can be increased, and the specific resistance of the electrolytic solution 3 can be reduced. Moreover, the freezing point of the solvent is reduced, and electrical characteristics at a temperature lower than the freezing point can be secured. On the other hand, according to the solvent composed of an organic solvent alone, because water is not contained in the electrolytic solution 3, hydration reaction of the electrode foils 8, 9 and water at a high temperature can be prevented, and an increase in the internal pressure of the capacitor element 2 caused therefrom can be prevented.

As the organic solvent, examples of a protic solvent include monohydric alcohols such as methyl alcohol, ethyl alcohol, propyl alcohol and butyl alcohol, dihydric alcohols such as ethylene glycol, diethylene glycol, triethylene glycol, polyethylene glycol and propylene glycol, trihydric alcohols such as glycerol and the like, derivatives thereof and the like. Aprotic solvents include lactone compounds such as $\gamma$-butyrolactone, sulfolane, methyl sulfolane, dimethyl sulfolane, ethylene carbonate, propylene carbonate, pyrrolidine, 2-pyrrolidinone, N-methyl-2-pyrrolidinone, 1,3-dimethyl-2-imidazolidinone, tetrahydrofuran, acetonitrile, N-methylformamide, N,N-dimethylformamide, nitrobenzene and the like, derivatives thereof and the like. A kind thereof may be used alone, or a mixture of two or more kinds thereof may be used. For example, a protic solvent and an aprotic solvent may be used together.

Moreover, as the solute as the electrolyte, an organic acid, an inorganic acid, a composite compound of an organic acid and an inorganic acid, a derivative thereof or a salt thereof can be applied. A kind thereof may be used alone, or a mixture of two or more kinds thereof may be used. For example, an organic acid and an inorganic acid may be used together.

As the organic acid and the derivative thereof, examples of monocarboxylic acids include formic acid, acetic acid, propionic acid, butyric acid, benzoic acid, caprylic acid and the like and derivatives thereof. Moreover, dicarboxylic acids include oxalic acid, malonic acid, succinic acid, glutaric acid, adipic acid, fumaric acid, maleic acid, phthalic acid, azelaic acid, sebacic acid, 1,6-decanedicarboxylic acid, 5,6-decanedicarboxylic acid, 1,10-decanedicarboxylic acid and the like and derivatives thereof. Moreover, hydroxycarboxylic acids include citric acid, salicylic acid and the like and derivatives thereof. Examples of the inorganic acid and the derivative thereof include phosphoric acid, boric acid, sulfamic acid and the like and derivatives thereof. Examples of the composite compound of an organic acid and an inorganic acid and the derivative thereof include a boron complex of a dicarboxylic acid or hydroxycarboxylic acid and the like, and examples thereof include borodioxalic acid, borodimalonic acid, borodisuccinic acid, borodiadipic acid, borodimaleic acid, borodiphthalic acid, borodiglycolic acid, borodicitric acid, borodisalicylic acid and the like and derivatives thereof.

Examples of the salt of the organic acid, the inorganic acid, the composite compound of an organic acid and an inorganic acid or the derivative thereof include an ammonium salt, an alkylammonium salt, an amine salt, an amidine salt, a sodium salt, a potassium salt and the like.

An optimum amount of the electrolyte depending on the kind thereof may be added in the range in which desired electric conductance can be secured and in which the electrolyte can be dissolved in the solvent. For example, the organic acid, the derivative thereof or the salt thereof may be added in the range of around 3 [mass%] to 30 [mass%] of the total mass of the electrolytic solution 3. Moreover, the inorganic acid, the derivative thereof or the salt thereof may be added in the range of around 0.1 [mass%] to 15 [mass%] of the total mass of the electrolytic solution 3. Furthermore, when a mixture of the organic acid-based component and the inorganic acid-based component is used, the mixture may be added in the range of around 0.1 [mass%] to 15 [mass%] of the total mass of the electrolytic solution 3.

The electrolytic solution 3 may appropriately contain a predetermined additive in addition to the solvent and the solute. The additive includes a substance having the function which can serve as a solvent or a solute, but the additive generally refers to an additive which is added in a relatively small amount, separately from the main solvent and the main solute, mainly for the purpose of achieving an action effect by another function. Examples of the additive include a chelating compound, a saccharide, gluconic acid, a nitro compound and the like.

Here, the viscosity $\mu$ of the electrolytic solution 3 according to the embodiment is set at 400 [cP] or less and more preferably set at 300 [cP]. Here, the viscosity $\mu$ in this application is the viscosity $\mu$ measured using the electrolytic solution 3 at 25 [°C] with a vibration viscometer and is a value with unit [cP] (the same applies to all the "viscosities $\mu$" irrespective of whether the definition is described). When the viscosity $\mu$ of the electrolytic solution 3 is configured in an appropriate state in relation to the sintered foil, a relatively high capacitance specific to the sintered foil can be exhibited stably.

As described above, in a sintered foil, the particle size D of the powder particles of the aluminum powder or the sintered particles 8e thereof is preferably small because the capacitance of the sintered foil can be made high, but as the particle size D becomes smaller, the capacitance has a feature of easily becoming unstable in relation to the feature of the electrolytic solution 3. On the other hand, in the embodiment, because the viscosity $\mu$ of the electrolytic solution 3 is adjusted, the capacitance appears stably irrespective of the size of the sintered particles 8e (namely also with a sintered foil composed of relatively small sintered particles 8e). As a result, according to the Examples (Test 1) described below, when the viscosity $\mu$ is set at 400 [cP] or less for a sintered foil of sintered particles 8e of, for example, 5.0 [$\mu$m] or 3.0 [$\mu$m], the foil capacity (the capacitance of the foil) can be exhibited with an appearance rate exceeding 80 [%]. Moreover, by setting the viscosity $\mu$ at 300 [cP] or less, the foil capacity (the capacitance of the foil) can be exhibited with an appearance rate exceeding 90 [%]. Accordingly, the capacitance of the sintered foil according to the embodiment can be made sufficiently high by reducing the particle size D of the powder particles of the aluminum powder or the sintered particles 8e thereof, for example, to 5.0 [$\mu$m] or less, more preferably 3.0 [$\mu$m] or less, and such a high capacitance can be exhibited stably.

Here, the viscosity $\mu$ of the electrolytic solution 3 can be adjusted to a desired viscosity $\mu$ by the combination of the electrolytic solution components described above (the solvent component and the solute component) (for example, selection of the substances or adjustment of the mixing ratios thereof) or by adjusting the concentration or the like.

Moreover, that the viscosity $\mu$ of the electrolytic solution 3 is set at, for example, 400 [cP] or less means that the electrolytic solution 3 impregnated in the capacitor element 2 is set at the viscosity $\mu$ during the production process of the electrolytic capacitor 1. The viscosity $\mu$ of the electrolytic solution 3 may slightly decrease through absorption of the water in the capacitor element 2 soon after impregnation or slightly increase through evaporation of the water with time. Even considering such possibilities, however, it is believed that the viscosity $\mu$ of the electrolytic solution 3 is almost the same as that at the time of impregnation when the electrolytic capacitor 1 which has been finished through subsequent production processes is in the unused state. Therefore, for example, that "the viscosity $\mu$ of the electrolytic solution 3 is set at 400 [cP] or less" can also be defined as that "the viscosity $\mu$ of the electrolytic solution 3 in the electrolytic capacitor 1 is 400 [cP] or less" as a synonymous structure. Here, there is a possibility that the viscosity $\mu$ slightly changes through evaporation of a part of the components also during the measurement of the viscosity $\mu$ of the electrolytic solution 3, but the change is very small and does not cause any problem.

When the electrolytic capacitor 1 is used further, however, evaporation of the water proceeds, and thus the viscosity $\mu$ of the electrolytic solution 3 increases. As a result, the capacitance sometimes decreases because the balance between the feature (viscosity $\mu$) of the electrolytic solution 3 and the structure (particle size D) of the sintered particles 8e is disturbed or for another reason. Thus, to stabilize the capacitance in response to deterioration with time after the use of the electrolytic capacitor 1, the viscosity $\mu$ of the electrolytic solution 3 is preferably set more strictly as follows in relation to the particle size D of the powder particles of the aluminum powder or the sintered particles 8e thereof. That is, the viscosity μ of the electrolytic solution 3 at 25 [°C] preferably satisfies the inequality (1) below and more preferably further satisfies the inequality (2) below.

$$\mu \le 9.438D + 227 \quad \cdots (1)$$

$$\mu \le 6.726D + 162 \quad \cdots (2)$$

Here, D in the inequality (1) and the inequality (2) above means the particle size D [μm] of the powder particles of the metal powder (aluminum powder here) or the sintered particles 8e of the metal powder (the aluminum powder here), and the particle size D means the median diameter at a cumulative value of 50 [%] in a particle size distribution based on volume of the powder particles measured by the laser diffraction-scattering method or the sintered particles 8e measured by observation with a scanning electron microscope. Regarding the particle size distribution of the sintered particles 8e, the particle size distribution based on volume is calculated from the particle size distribution based on number.

According to the analysis in the Examples (Test 1) described below, it was found that, in the electrolytic capacitor 1 in which a sintered foil is applied, irrespective of the size of the sintered particles 8e (powder particles), when the viscosity μ of the electrolytic solution 3 increases in a predetermined manner, a lower viscosity area in which the capacitance hardly changes (stable area) and a higher viscosity area in which the capacitance decreases relatively largely (unstable area) are included. Thus, the viscosity μ value at the boundary value of the stable area and the unstable area was defined as "critical viscosity value", and the viscosity μ value of an area which is in the unstable area but is close to the critical viscosity value and in which the decrease in the capacitance is relatively small was defined as "subcritical viscosity value". Specifically, the critical viscosity value was defined as the viscosity μ value, where the capacity appearance rate change is 0 [%] based on an approximate straight line of the change, and the subcritical viscosity value was defined as the viscosity μ value, where the change is acceptable -1 [%]. By setting the viscosity μ of the electrolytic solution 3 at the critical viscosity value or less (the inequality (2)) or the subcritical viscosity value or less (the inequality (1)), the capacitance can be exhibited stably despite deterioration with time (an increase in the viscosity μ) due to use of the electrolytic capacitor 1.

The inequality (1) above corresponds to a parameter which can set the viscosity μ of the electrolytic solution 3 at the subcritical viscosity value or less, and the inequality (2) above corresponds to a parameter which can set the viscosity μ of the electrolytic solution 3 at the critical viscosity value or less. The inequalities based on approximate straight lines which are calculated by calculating the critical viscosity values and the subcritical viscosity values of sintered foils composed of sintered particles 8e having different particle sizes D and by plotting the relationships between the particle size D [μm] and the critical viscosity value [cP] and the subcritical viscosity value [cP] on graphs are the inequality (1) and the inequality (2) above. According to this, the viscosity μ range of the electrolytic solution 3 to be aimed is found from the particle size D of the sintered particles 8e or the powder particles composing the sintered foil. By achieving the viscosity μ range, when the subcritical viscosity value (the inequality (1)) is satisfied, despite deterioration with time (an increase in the viscosity μ) due to use of the electrolytic capacitor 1, the high capacitance specific to the sintered foil can be exhibited stably over a long time almost without a decrease. When the critical viscosity value (the inequality (2)) is further satisfied, the capacitance can be exhibited stably over a longer time. As a result, the lifetime of the electrolytic capacitor 1 can be extended.

According to the inequality (1), μ≤312 [cP] when the particle size D = 9.0 [μm], μ≤274 [cP] when the particle size D = 5.0 [μm], and μ≤255 [cP] when the particle size D = 3.0 [μm]. Moreover, according to the inequality (2), μ≤223 [cP] when the particle size D = 9.0 [μm], μ≤196 [cP] when the particle size D = 5.0 [μm], and μ≤182 [cP] when the particle size D = 3.0 [μm]. All satisfy the condition that the viscosity μ of the electrolytic solution 3 is 400 [cP] or less described above.

In the embodiment, no lower limit is particularly set for the viscosity μ of the electrolytic solution 3. To secure certain property of retaining the electrolytic solution 3 in the capacitor element 2, however, for example, the viscosity μ of the electrolytic solution 3 is preferably 2 [cP] or more, more preferably 10 [cP] or more, and further preferably 30 [cP] or more.

In the electrolytic capacitor 1 according to the embodiment having the above structure, of the electrode foils 8, 9, at least the anode foil 8 is composed of a sintered foil composed of the sintered particles 8e having a predetermined particle size D, and the electrolytic solution 3 is configured to have a predetermined feature, but the basic production of the capacitor element 2 and the assembly of the electrolytic capacitor 1 except for the structures can be conducted according to a conventional example. The winding-type electrolytic capacitor 1 according to the embodiment is formed, for example, by sandwiching the separators 10 (the first separator 10a and the second separator 10b) between the anode foil 8, in which the lead terminal 4 (the anode terminal 4a) is connected to the sintered foil having the oxide film 8d (not illustrated in Fig. 3B) formed thereon by chemical conversion treatment by swaging or the like, and the cathode foil 9, in which the lead terminal 4 (the cathode terminal 4b) is connected to the etching foil by swaging or the like, and winding these in the state into an approximately column shape as illustrated in Fig. 3A and Fig. 3B. By subjecting the obtained wound material to chemical conversion treatment again according to the need and then immersing this in an electrolytic solution 3 tank having the composition according to the embodiment, the electrolytic solution 3 can be introduced (impregnated) in the space between both electrode foils 8, 9, and the capacitor element 2 can be produced. The lead wires 11 are connected to the lead terminals 4 at appropriate time (the lead terminals 4 and the lead wires 11 are not illustrated in Fig. 3A). The electrolytic solution 3 may be introduced under reduced pressure according to the need.

Next, the capacitor element 2 is housed in the external material 6, and the opening of the external material 6 is sealed with the sealant material 5 placed at the opening. At this point, the lead terminals 4 (the anode terminal 4a and the cathode terminal 4b) are caused to go through and extracted from two holes made in the sealant material 5. Next, the opening edge of the external material 6 is swaged to the sealant material 5 and tightly closed. In this manner, the electrolytic capacitor 1 can be produced. Then, according to the need, aging treatment for repairing defects in the oxide film 8d caused during cutting and winding of the foils may be conducted by applying voltage under a high-temperature condition for a predetermined time.

Examples

[Test 1]

Sintered foils were produced by sintering aluminum powders having particle sizes D of the powder particles of 3.0 [μm], 5.0 [μm] and 9.0 [μm]. The sintered foil composed of the sintered particles (powder particles) of 3.0 [μm], the sintered foil composed of the sintered particles (powder particles) of 5.0 [μm] and the sintered foil composed of the sintered particles (powder particles) of 9.0 [μm] are sometimes referred to as "3.0 [μm] foil", "5.0 [μm] foil" and "9.0 [μm] foil", respectively, below. The particle sizes D of the powder particles are the median diameters at a cumulative value of 50 [%] in particle size distributions based on volume measured by the laser diffraction-scattering method.

First, coating liquids obtained by mixing 60 [parts by mass] of the aluminum powders having the respective particle sizes D and 40 [parts by mass] of an acrylic binder and dispersing in toluene were applied to both surfaces of aluminum foils using an applicator to form films and dried. Next, the aluminum foils were heated in argon gas atmosphere at 655 [°C] for seven [hours] for sintering. Next, assuming that the sintered foils were applied to electrolytic capacitors for middle to high voltage of rated voltage of 400 [V] or 450 [V] or more here, the sintered foils were subjected to predetermined anodic oxidation treatment, and thus oxide films having film voltage resistance of 650 [V] or more were formed.

Then, test pieces with a predetermined size were cut out according to the descriptions in JEITA standard: EIAJ RC-2364A "Test methods of electrode foil for aluminum electrolytic capacitors" (revised in March, 1999) (https://www.jeita.or.jp/japanese/standard/book/RC-2364A/#target/page_no=1) of Japan Electronics and Information Technology Industries Association (former Electronic Industries Association of Japan).

The foil capacities (capacitances) [μF/cm$^2$] of the sintered foils for evaluation thus produced at 120 [Hz], which is a frequency range in which electrolytic capacitors are generally often used, were measured according to the descriptions in the standard above (EIAJ RC-2364A), using an aqueous ammonium pentaborate solution corresponding to the measurement solution "C" of a capacitance for an anodized foil for medium and high voltage (voltage classification: rated film voltage resistance of 170 [V] or more) as a measurement solution (1). After washing and drying the foils, the foil capacities (capacitances) [μF/cm$^2$] at 120 [Hz] were measured similarly, using electrolytic solutions which were adjusted to the viscosities μ shown in Table 1 and which were composed of predetermined components as measurement solutions (2) instead of the measurement solution (1). The viscosities μ are viscosities μ [cP] which were measured using the electrolytic solutions at 25 [°C] with a vibration viscometer as described above. Specifically, a vibration viscometer manufactured by SEKONIC CORPORATION (product name: Visco Mate VM-1A) was used. Moreover, the foil capacities [μF/cm$^2$] are the foil capacity values per unit area (1 cm$^2$) [μF/cm$^2$] which were calculated from the measured foil capacity values [μF].

As in the equation below, a capacity appearance rate (A) was calculated by dividing the foil capacity value [μF/cm$^2$] in the measurement solution (2) by the foil capacity value [μF/cm$^2$] in the measurement solution (1).

Capacity appearance rate (A) = Foil capacity value [μF/cm$^2$] in measurement solution (2) / Foil capacity value [μF/cm$^2$] in measurement solution    (1)

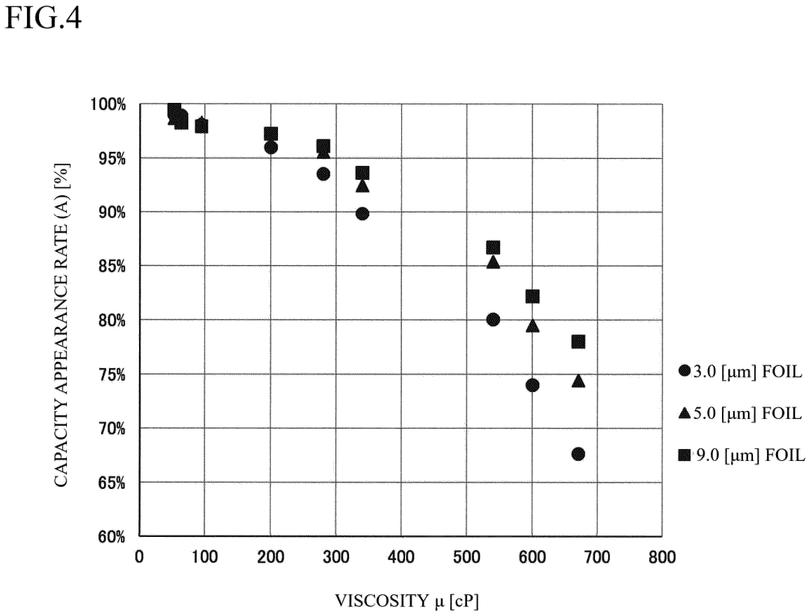

The capacity appearance rate (A) indicates the stability (or the instability) of the capacitance of the sintered foil in relation to the feature (viscosity μ) of the electrolytic solution, and a value closer to 1 (100 [%] when converted to [%] unit) indicates that the capacitance is exhibited stably. The capacity appearance rates (A) converted to [%] unit are shown in Table 1 and Fig. 4 (here, the (A) values [%] in Table 1 are values rounded off to the nearest tenth).

[Table 1]

| Viscosity $\mu$ of measurement solution (2) [cP] | Foil capacity in measurement solution (1) [$\mu$F/cm$^2$] | | | Foil capacity in measurement solution (2) [$\mu$F/cm$^2$] | | | Capacity appearance rate (A) [%] | | |
|---|---|---|---|---|---|---|---|---|---|
| | 3.0[$\mu$m] foil | 5.0[$\mu$m] foil | 9.0[$\mu$m] foil | 3.0[$\mu$m] foil | 5.0[$\mu$m] foil | 9.0[$\mu$m] foil | 3.0[$\mu$m] foil | 5.0[$\mu$m] foil | 9.0[$\mu$m] foil |
| 52 | 0.8552 | 0.5828 | 0.4350 | 0.8466 | 0.5752 | 0.4326 | 99.0% | 98.7% | 99.4% |
| 63 | 0.8512 | 0.5802 | 0.4392 | 0.8422 | 0.5706 | 0.4316 | 98.9% | 98.3% | 98.3% |
| 94 | 0.8530 | 0.5788 | 0.4444 | 0.8370 | 0.5690 | 0.4352 | 98.1% | 98.3% | 97.9% |
| 200 | 0.8506 | 0.5790 | 0.4376 | 0.8166 | 0.5632 | 0.4256 | 96.0% | 97.3% | 97.3% |
| 280 | 0.8550 | 0.5852 | 0.4382 | 0.8000 | 0.5594 | 0.4212 | 93.6% | 95.6% | 96.1% |
| 340 | 0.8520 | 0.5810 | 0.4374 | 0.7654 | 0.5374 | 0.4096 | 89.8% | 92.5% | 93.6% |
| 540 | 0.8532 | 0.5780 | 0.4410 | 0.6832 | 0.4936 | 0.3824 | 80.1% | 85.4% | 86.7% |
| 600 | 0.8584 | 0.5806 | 0.4408 | 0.6354 | 0.4618 | 0.3624 | 74.0% | 79.5% | 82.2% |
| 670 | 0.8532 | 0.5842 | 0.4408 | 0.5772 | 0.4350 | 0.3440 | 67.7% | 74.5% | 78.0% |

As shown in Table 1, it is seen that the capacitance of the sintered foil became larger as the particle size D of the sintered particles (powder particles) became smaller. On the other hand, as shown in Table 1 and Fig. 4, the capacity appearance rate (A) was low when the viscosity $\mu$ of the electrolytic solution was high, and for example, the values of the 3.0 [$\mu$m] foil, the 5.0 [$\mu$m] foil and the 9.0 [$\mu$m] foil were 67.7 [%], 74.5 [%] and 78.0 [%], respectively, when the viscosity $\mu$ was 670 [cP]. This shows that, as the particle size D of the sintered particles (powder particles) becomes smaller, the capacitance has a feature of easily becoming relatively unstable in relation to the viscosity $\mu$ of the electrolytic solution. On the other hand, with the setting at a low viscosity $\mu$ of the electrolytic solution of a certain value or less, irrespective of the particle size D of the sintered particles (powder particles), the capacity appearance rate (A) was close to 100 [%], and the capacitance appeared stably. Specifically, the decrease in the capacitance was certainly suppressed to less than -20 [%] (the capacity appearance rate (A) exceeded 80 [%]) when the viscosity $\mu$ of the electrolytic solution was 400 [cP] or less, and the decrease in the capacitance was suppressed to less than -10 [%] (the capacity appearance rate (A) exceeded 90 [%]) when the viscosity $\mu$ of the electrolytic solution was 300 [cP] or less.

Therefore, in an electrolytic capacitor in which a sintered foil is applied, the viscosity $\mu$ of the electrolytic solution is preferably configured at 400 [cP] or less, more suitably 300 [cP] or less, because the foil capacity can be exhibited stably. Furthermore, the particle size D of the sintered particles (powder particles) is more preferably configured at 5.0 [$\mu$m] or less, more suitably 3.0 [$\mu$m] or less, because a higher capacitance can be achieved by an increase in the foil capacity itself and because the capacity can be exhibited stably.

Next, as a capacity appearance rate change (B) per unit viscosity (1 [cP]), the derivative of the capacity appearance rate (A) value at each viscosity $\mu$ value was calculated. To calculate the derivative, the formula of the second-order accurate difference with unequal spacing below was applied.

$$f'(x_i)=(s^2 f_{i+1}+(t^2-s^2)f_i-t^2 f_{i-1})/st(s+t)$$

$$f_i \equiv f(x_i)$$

$$t \equiv (x_{i+1}-x_i)$$

$$s \equiv (x_i-x_{i-1})$$

Next, to evaluate the capacity appearance rate change (C) with a predetermined increase in the viscosity $\mu$ of the electrolytic solution, assuming an increase by 10 [%] here as an optional fluctuating value (increase), the capacity appearance rate change (C) with an increase in the viscosity by 10 [%] was calculated as in the equation below, by multiplying the capacity appearance rate change (B) per unit viscosity (the derivative of the capacity appearance rate (A)) by the viscosity fluctuation rate (10 [%] of the viscosity μ value here).

Capacity appearance rate change (C) with increase of viscosity by 10 [%] = "Capacity appearance rate change (B) per unit viscosity (Derivative of capacity appearance rate (A))" × (Viscosity μ value × 0.1)

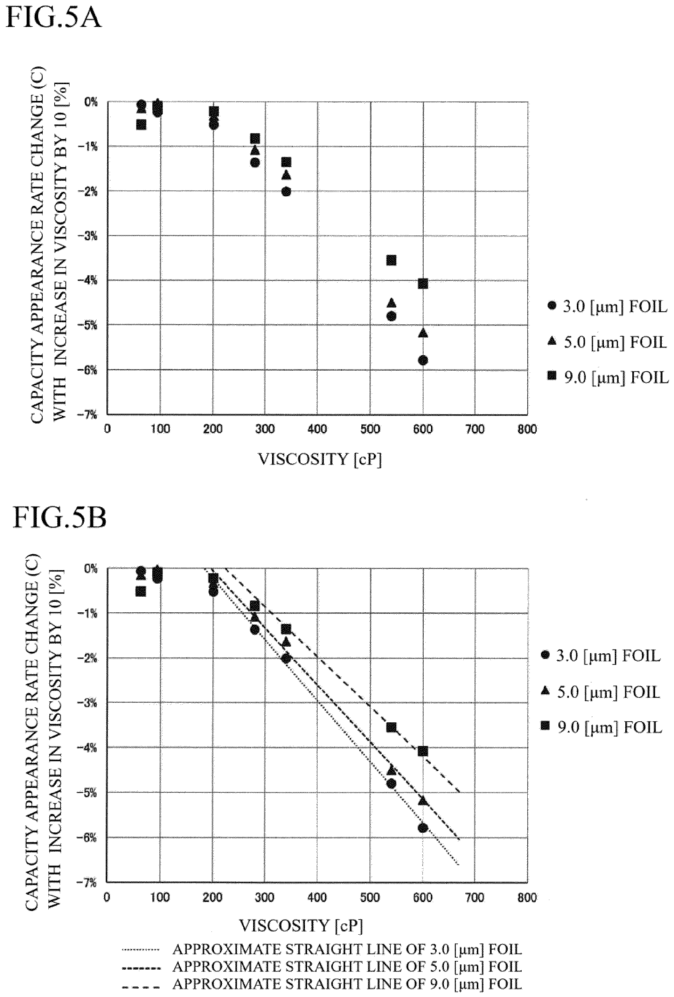

The capacity appearance rate changes (C) with an increase in the viscosity by 10 [%] converted to [%] unit are shown in Table 2 and Fig. 5A (here, the (C) values [%] in Table 2 are values rounded off to two decimal places).

[Table 2]

| Viscosity μ of measurement solution (2) [cP] | Capacity appearance rate change (C) with increase in viscosity by 10 [%] | | |
|---|---|---|---|
| | 3.0[μm] foil | 5.0[μm] foil | 9.0[μm] foil |
| 52 | - | - | - |
| 63 | -0.07% | -0.15% | -0.52% |
| 94 | -0.23% | -0.03% | -0.09% |
| 200 | -0.52% | -0.32% | -0.22% |
| 280 | -1.36% | -1.08% | -0.83% |
| 340 | -2.01% | -1.63% | -1.35% |
| 540 | -4.80% | -4.50% | -3.55% |
| 600 | -5.78% | -5.16% | -4.07% |
| 670 | - | - | - |

As shown in Table 2 and Fig. 5A, it is seen that, irrespective of the particle size D of the sintered particles (powder particles), namely in all the sintered foils composed of sintered particles having different particle sizes D, the capacity appearance rate change (C) has a viscosity μ area in which the capacitance hardly changes (stable area) and a viscosity μ area in which the capacitance decreases relatively largely (unstable area). From Fig. 5A, it can be seen that the boundary values of the stable area and the unstable area (referred to as "critical viscosity values") are around approximately 200 [cP].

Thus, approximate linear equations were calculated for the 3.0 [μm] foil, the 5.0 [μm] foil and the 9.0 [μm] foil by the method of least squares from four points in the unstable area of 280 [cP], 340 [cP], 540 [cP] and 600 [cP]. To calculate the approximate linear equations, the ordinate intercepts and the intersections with the horizontal axis of the approximate linear equations f(x), g(x) and h(x) were calculated as the solutions which minimized the total sums of the residual sums of squares of the three sintered foils. Here, the values of the ordinate intercepts were regarded as the same for all the approximate linear equations, and the constraint was added. Fig. 5B is a graph in which the calculated approximate straight lines are drawn in the scatter plot of Fig. 5A.

The calculated ordinate intercept values were 2.48 [%] (rounded off to two decimal places). Moreover, the values of the intersections with the horizontal axis were 182.6 [cP] for the 3.0 [μm] foil, 195.1 [cP] for the 5.0 [μm] foil and 222.7 [cP] for the 9.0 [μm] foil (all rounded off to the nearest tenth). The intersections with the horizontal axis indicate the viscosity μ values [cP] where the capacity appearance rate change (C) is 0 [%] on the approximate straight lines and were defined as the "critical viscosity values" described above. Furthermore, the viscosity μ values [cP] where the capacity appearance rate change (C) was -1 [%] on the approximate straight lines were calculated and defined as the "subcritical viscosity values". The subcritical viscosity values of the 3.0 [μm] foil, the 5.0 [μm] foil and the 9.0 [μm] foil were 256.2 [cP], 273.8 [cP] and 312.5 [cP] (all rounded off to the nearest tenth), respectively.

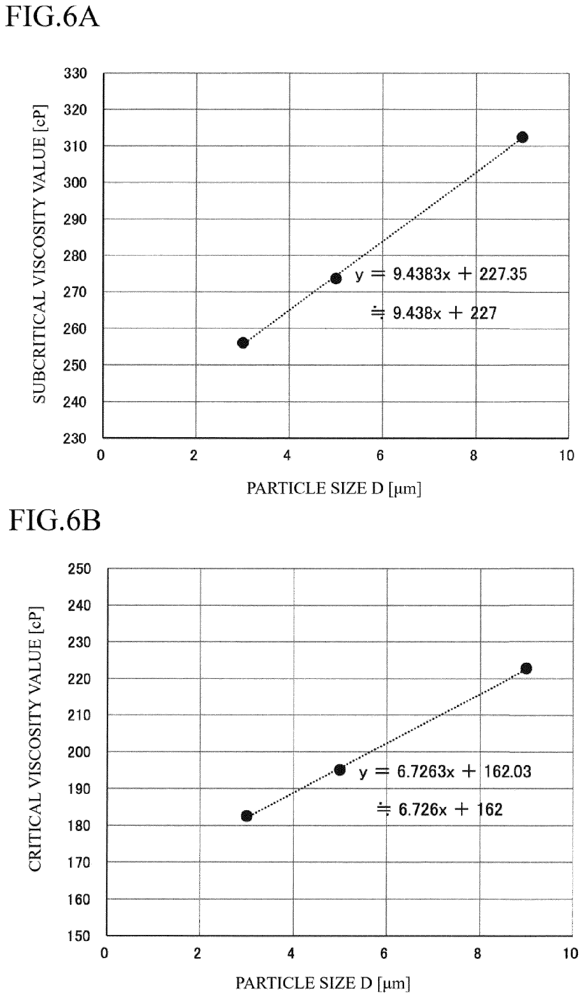

The subcritical viscosity values of the sintered foils thus obtained were plotted on a graph in relation to the particle size D [μm] of the sintered particles (powder particles), and the approximate linear equation (1) below was obtained by the method of least squares. The graph is shown in Fig. 6A.

$$y = 9.4383x + 227.35 \quad \cdots (1)$$

$$\fallingdotseq 9.438x + 227$$

Moreover, the critical viscosity values of the sintered foils thus obtained were similarly plotted on a graph in relation to the particle size D [μm] of the sintered particles (powder particles), and the approximate linear equation (2) below was obtained by the method of least squares. The graph is shown in Fig. 6B.

$$y=6.7263x+162.03 \quad \cdots(2)$$
$$\fallingdotseq 6.726x+162$$

As described above, the critical viscosity value indicates the viscosity $\mu$ value at the boundary of a viscosity $\mu$ area in which the capacitance hardly changes (stable area) and a viscosity $\mu$ area in which the capacitance decreases relatively largely (unstable area) when the viscosity $\mu$ increases in a predetermined manner and was defined as the viscosity $\mu$ value where the capacity appearance rate change (C) is 0 [%] on the approximate straight line. The subcritical viscosity value is defined as the viscosity $\mu$ value where the capacity appearance rate change (C) is acceptable -1 [%] on the approximate straight line, and this indicates the viscosity $\mu$ value of an area which is in the unstable area but is close to the critical viscosity value and in which the decrease in the capacitance is relatively small.

Thus, in an electrolytic capacitor in which a sintered foil is applied, when the viscosity $\mu$ [cP] of the electrolytic solution is set in the state of satisfying the inequality (1) "$\mu \leq 9.438D+227$", where the particle size D of the sintered particles (powder particles) is a variable, (namely the subcritical viscosity value or less) based on the approximate linear equation (1), the viscosity $\mu$ is set near the critical viscosity value or in the stable area. As a result, for example, even when the viscosity $\mu$ increases due to use of the electrolytic capacitor and advance in evaporation of the water with time, the high capacitance specific to the sintered foil can be exhibited stably over a long time almost without a decrease, and the lifetime of the electrolytic capacitor can be extended. Furthermore, when the viscosity $\mu$ [cP] of the electrolytic solution is set in the state of satisfying the inequality (2) "$\mu \leq 6.726D+162$", where the particle size D of the sintered particles (powder particles) is a variable, (namely the critical viscosity value or less) based on the approximate linear equation (2), the viscosity $\mu$ is certainly set in the stable area. As a result, the capacitance can be exhibited stably over a longer time, and the lifetime characteristic can be further improved.

Furthermore, when it is regarded as D=0 as the theoretical minimum value of the viscosity $\mu$ in the inequality (1) and the inequality (2), "$\mu \leq 227$" is derived from the inequality (1), and "$\mu \leq 162$" is derived from the inequality (2). From this, when the viscosity $\mu$ of the electrolytic solution is at least 227 [cP] or less, more preferably at least 162 [cP] or less, irrespective of the particle size D of the sintered particles (powder particles), the stability of the capacitance can be secured in response to a predetermined increase in the viscosity $\mu$ of the electrolytic solution.

Here, when the particle size D [$\mu$m] value is applied to see whether the above inequalities are satisfied, a value with one decimal place (when the value is measured to two or more decimal places, the value is rounded off to the nearest tenth) is substituted. The viscosity $\mu$ value [cP] is calculated as an integer by rounding off the solution to the nearest whole number.

[Test 2]

As described above, the lower limit of the viscosity $\mu$ of the electrolytic solution is not particularly set in the invention, but the lower limit of the viscosity $\mu$ was examined as a more suitable embodiment of the invention. A 3.0 [$\mu$m] foil, a 5.0 [$\mu$m] foil and a 9.0 [$\mu$m] foil were prepared by the same method as in Test 1. That is, coating liquids obtained by mixing 60 [parts by mass] of aluminum powders having respective particle sizes D and 40 [parts by mass] of an acrylic binder and dispersing in toluene were applied to both surfaces of aluminum foils having a thickness of 30 [$\mu$m] using an applicator to form films and dried. Next, the aluminum foils were subjected to degreasing treatment at 200 [°C] to 450 [°C] for five [hours] in atmospheric atmosphere and then heated in argon gas atmosphere at 655 [°C] for seven [hours] for sintering. In this manner, aluminum sintered foils having a total thickness of 130 [$\mu$m] in which a sintered material film of 50 [$\mu$m] was formed on both surfaces of a base material having a thickness of 30 [$\mu$m] were produced. Next, oxide films having film voltage resistance of 650 [V] or more were formed on the sintered foils in the same manner as in Test 1. Then, the sintered foils were cut into test pieces with a size of 17 [mm] $\times$ 50 [mm] as sintered foils for evaluation, and the weights (weights A) were measured.

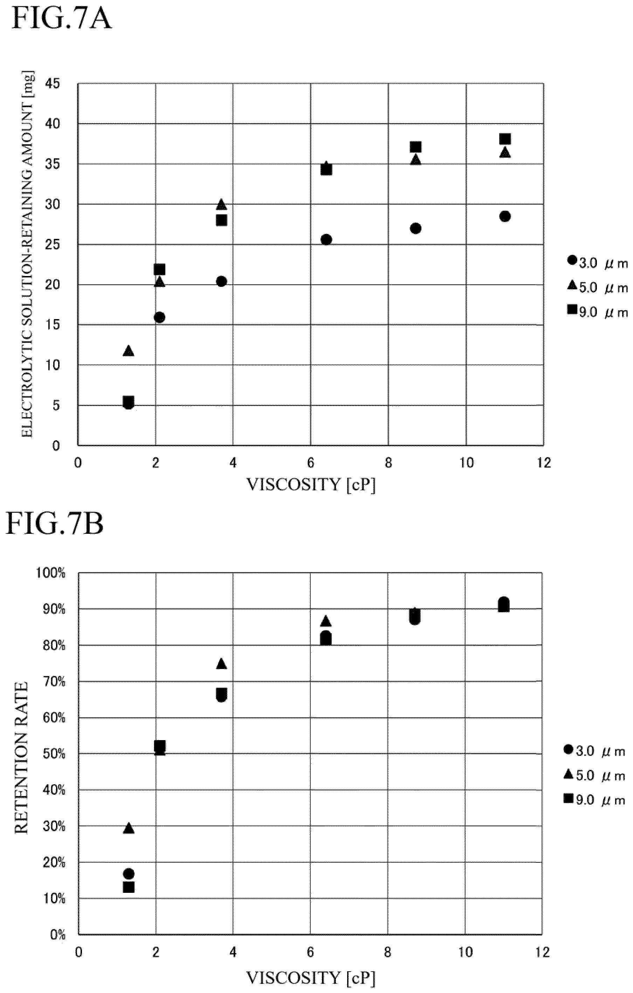

Next, the sintered foils were immersed in electrolytic solutions which were adjusted to the viscosities $\mu$ shown in Table 3 and which were composed of predetermined components, and thus the electrolytic solutions were impregnated in the sintered foils. Next, draining treatment of centrifuging the sintered foils taken out of the electrolytic solutions at 1000 [rpm] for five [minutes] was conducted, and the weights soon after the draining treatment (weights B) were measured. Then, the weight increases [mg] obtained by subtracting the weights A [mg] from the weights B [mg] were calculated as the electrolytic solution-retaining amounts [mg] of the sintered foils. Here, the viscosities $\mu$ are viscosities $\mu$ [cP] which were measured using the electrolytic solutions at 25 [°C] with a vibration viscometer as described above. Specifically, a vibration viscometer manufactured by SEKONIC CORPORATION (product name: Visco Mate VM-1A) was used. The electrolytic solution-retaining amounts of the sintered foils are shown in Table 3 and Fig. 7A.

[Table 3]

| Electrolytic solution-retaining amount [mg] | Particle size D of sintered particles (powder particles) | | |
|---|---|---|---|
| Viscosity $\mu$ of electrolytic solution | 3.0$\mu$m | 5.0$\mu$m | 9.0$\mu$m |
| 1.3cP | 5.2 | 11.8 | 5.5 |
| 2.1cP | 15.9 | 20.4 | 21.9 |
| 3.7cP | 20.4 | 30.0 | 28.0 |
| 6.4cP | 25.6 | 34.7 | 34.3 |
| 8.7cP | 27.0 | 35.6 | 37.1 |
| 11.0cP | 28.5 | 36.5 | 38.1 |

As shown in Table 3 and Fig. 7A, it is seen that, irrespective of the particle size D of the sintered particles (powder particles), namely in all the sintered foils composed of sintered particles having different particle sizes D, the electrolytic solution-retaining amount gradually decreases when the viscosity $\mu$ decreases extremely in a low viscosity area in which the viscosity $\mu$ of the electrolytic solution is lower than 50 [cP] for example. This means that, to secure the retention property of the electrode foil, namely certain property of retaining the electrolytic solution in a capacitor element in which a sintered foil is applied for an electrode foil, the electrolytic solution preferably has a certain viscosity $\mu$ or more. On the other hand, as shown in Table 3 and Fig. 7A, it is seen that, in all the sintered foils composed of sintered particles having different particle sizes D, when the extremely low viscosity $\mu$ increases in the low viscosity area in which the viscosity $\mu$ of the electrolytic solution is lower than 50 [cP] for example, the electrolytic solution-retaining amount gradually increases, converges to a predetermined retention amount and enters a stable area almost without any change. Thus, for the purpose of examining a suitable lower limit of the viscosity $\mu$ based on the stability of the electrolytic solution-retaining amount, the measurement values in Table 3 were converted to retention rates [%] based on stable retention amounts (retention rates: 100 [%]), where 31 [mg] as an example of the electrolytic solution-retaining amount in the stable area of the 3.0 [$\mu$m] foil subjected to the test, 40 [mg] as an example of the electrolytic solution-retaining amount in the stable area of the 5.0 [$\mu$m] foil and 42 [mg] as an example of the electrolytic solution-retaining amount in the stable area of the 9.0 [$\mu$m] foil were regarded as the respective stable retention amounts. The results are shown in Table 4 and Fig. 7B.

[Table 4]

| Retention rate [%] | Particle size D of sintered particles (powder particles) | | |
|---|---|---|---|
| Viscosity $\mu$ of electrolytic solution | 3.0$\mu$m | 5.0$\mu$m | 9.0$\mu$m |
| 1.3cP | 16.77% | 29.50% | 13.10% |
| 2.1cP | 51.29% | 51.00% | 52.14% |
| 3.7cP | 65.81% | 75.00% | 66.67% |
| 6.4cP | 82.58% | 86.75% | 81.67% |
| 8.7cP | 87.10% | 89.00% | 88.33% |
| 11.0cP | 91.94% | 91.25% | 90.71% |

Specifically, the retention rates [%] in Table 4 and Fig. 7B are values calculated by the equation below (rounded off to two decimal places).

Retention rate [%] = (Electrolytic solution-retaining amount [mg] with subject particle size D (sintered foil) and subject viscosity $\mu$ (electrolytic solution) / Stable retention amount [mg] with subject particle size D (sintered foil)) $\times$ 100

For example, the retention rate [%] of the 3.0 [$\mu$m] foil at 1.3 [cP] is as follows.

$$\text{Retention rate } [\%] = (5.2/31) \times 100 = 16.77$$

As shown in Table 4 and Fig. 7B, a relatively stable property of retaining the electrolytic solution with a retention rate exceeding 50 [%] was secured when the viscosity $\mu$ of the electrolytic solution was 2 [cP] or more, in all the sintered foils composed of sintered particles having different particle sizes D. Moreover, a more stable property of retaining the electrolytic solution with a retention rate exceeding 85 [%] was secured when the viscosity $\mu$ of the electrolytic solution was 10 [cP] or more. Thus, it can be considered that, when the viscosity $\mu$ of the electrolytic solution is 30 [cP] or more for example, an extremely stable property of retaining the electrolytic solution can be secured. This suggests that, in an electrolytic capacitor in which a sintered foil is applied, to secure a certain property of retaining the electrolytic solution in the capacitor element, the viscosity $\mu$ of the electrolytic solution is preferably 2 [cP] or more, more preferably 10 [cP] or more, further preferably 30 [cP] or more.

[Test 3]

As described above, the lower limit of the viscosity $\mu$ of the electrolytic solution is not particularly set in the invention, but the lower limit of the viscosity $\mu$ was examined as a more suitable embodiment of the invention from another view. A 3.0 [$\mu$m] foil, a 5.0 [$\mu$m] foil and a 9.0 [$\mu$m] foil were prepared by the same method as in Test 1 and Test 2. That is, aluminum powders having different particle sizes D were used, and after aluminum sintered foils having a total thickness of 130 [$\mu$m] in which a sintered material film of 50 [$\mu$m] was formed on both surfaces of a base material having a thickness of 30 [$\mu$m] were produced, oxide films having film voltage resistance of 650 [V] or more were formed on the sintered foils. Moreover, aluminum etching foils for a cathode foil having a thickness of 20 [$\mu$m] were also prepared.

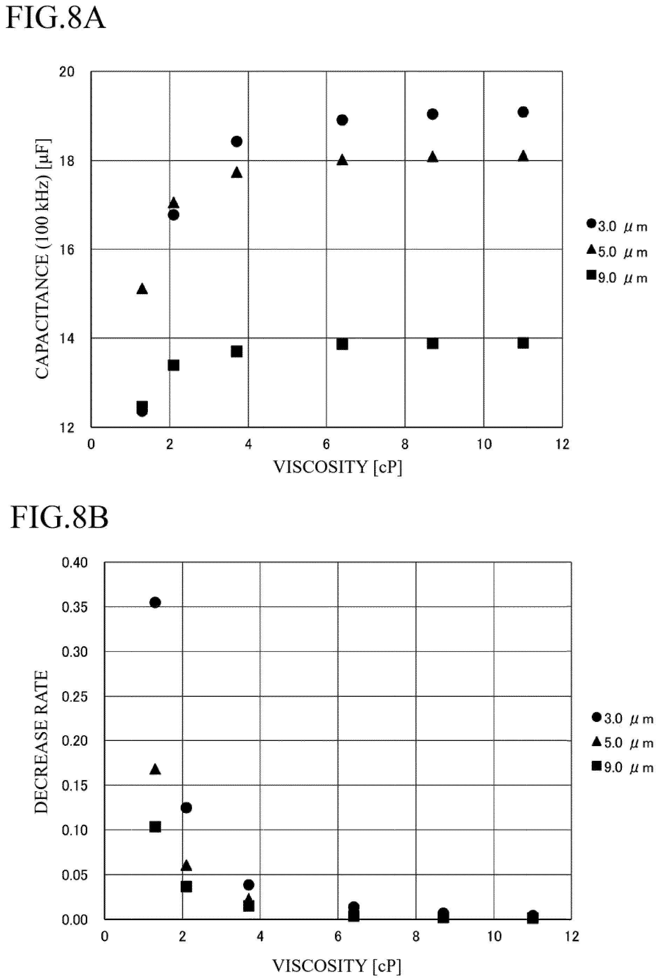

Next, of the electrode foils prepared, using the sintered foils as anode foils and using the etching foils as cathode foils, capacitor elements were wound. Next, a chemical conversion solution containing boric acid at a concentration of 4 [%] was impregnated in the capacitor elements, and re-chemical conversion treatment of applying voltage up to 470 [V] between the anode foil and the cathode foil was conducted. Next, the capacitor elements were repeatedly subjected to vacuum impregnation treatment with a predetermined washing solution and draining treatment by centrifugation, and thus the capacitor elements were washed. Next, the capacitor elements were repeatedly subjected to vacuum impregnation treatment with an electrolytic solution and draining treatment by centrifugation, and thus the capacitor elements were rinsed. Then, through vacuum impregnation treatment with an electrolytic solution, the electrolytic solutions which were adjusted to the viscosities $\mu$ shown in Table 5 and which were composed of predetermined components were impregnated in the capacitor elements. Next, the capacitor elements were subjected to draining treatment of centrifuging at 1000 [rpm] for three [seconds] and then housed in external materials, and the openings of the external materials were sealed with sealant materials placed at the openings. The capacitances [$\mu$F] of the winding-type electrolytic capacitors thus produced at 100 [kHz], which is a higher frequency than the frequency generally often used for electrolytic capacitors, were measured as high-frequency capacitances for evaluating the capability of handling a high frequency and the capability of handling an EMI (Electro Magnetic Interference) measure at a high level. Here, the viscosities $\mu$ are viscosities $\mu$ [cP] which were measured using the electrolytic solutions at 25 [°C] with a vibration viscometer as described above. Specifically, a vibration viscometer manufactured by SEKONIC CORPORATION (product name: Visco Mate VM-1A) was used. The high-frequency capacitances of the electrolytic capacitors in which the sintered foils for evaluation were applied are shown in Table 5 and Fig. 8A.

[Table 5]

| Capacitance (100kHz)[$\mu$F] | Particle size D of sintered particles (powder particles) | | |
|---|---|---|---|
| Viscosity $\mu$ of electrolytic solution | 3.0$\mu$m | 5.0$\mu$m | 9.0$\mu$m |
| 1.3cP | 12.37 | 15.11 | 12.47 |
| 2.1cP | 16.78 | 17.06 | 13.40 |
| 3.7cP | 18.43 | 17.74 | 13.70 |
| 6.4cP | 18.91 | 18.02 | 13.86 |
| 8.7cP | 19.04 | 18.09 | 13.88 |
| 11.0cP | 19.09 | 18.11 | 13.89 |

As shown in Table 5 and Fig. 8A, it is seen that, irrespective of the particle size D of the sintered particles (powder particles), namely in all the sintered foils composed of sintered particles having different particle sizes D, the capacitance gradually decreases when the viscosity $\mu$ decreases extremely in a low viscosity area in which the viscosity $\mu$ of the electrolytic solution is lower than 50 [cP] for example. On the other hand, as shown in Table 5 and Fig. 8A, it is seen that, in all the sintered foils composed of sintered particles having different particle sizes D, when the extremely low viscosity $\mu$ increases in the low viscosity area in which the viscosity $\mu$ of the electrolytic solution is lower than 50 [cP] for example, the capacitance gradually increases, converges to a predetermined capacity and enters a stable area almost without any change. Thus, the measurement values in Table 5 were converted to decrease rates R based on stable capacities (rates: 1), where 19.17 [$\mu$F] as an example of the capacitance in the stable area of the 3.0 [$\mu$m] foil subjected to the test, 18.16 [$\mu$F] as an example of the capacitance in the stable area of the 5.0 [$\mu$m] foil and 13.91 [$\mu$F] as an example of the capacitance in the stable area of the 9.0 [$\mu$m] foil were regarded as the respective stable capacities. The results are shown in Table 6 and Fig. 8B.

[Table 6]

| Decrease rate R | Particle size D of sintered particles (powder particles) | | |
|---|---|---|---|
| Viscosity $\mu$ of electrolytic solution | 3.0$\mu$m | 5.0$\mu$m | 9.0$\mu$m |
| 1.3cP | 0.3547 | 0.1680 | 0.1035 |
| 2.1cP | 0.1247 | 0.0606 | 0.0367 |
| 3.7cP | 0.0386 | 0.0231 | 0.0151 |
| 6.4cP | 0.0136 | 0.0077 | 0.0036 |
| 8.7cP | 0.0068 | 0.0039 | 0.0022 |
| 11.0cP | 0.0042 | 0.0028 | 0.0014 |

Specifically, the decrease rates R in Table 6 and Fig. 8B are values calculated by the equation below (rounded off to four decimal places).

Decrease rate R = 1 - (Capacitance [$\mu$F] with subject particle size D (sintered foil) and subject viscosity $\mu$ (electrolytic solution) / Stable capacity [$\mu$F] with subject particle size D (sintered foil))

For example, the decrease rate R of the 3.0 [$\mu$m] foil at 1.3 [cP] is as follows.

$$\text{Decrease rate } R = 1-(12.37/19.17)=0.3547$$

Here, the decrease rate R can also be comprehended with [%] unit by multiplying the decrease rate R calculated by the equation above by 100. The decrease rate R is sometimes described with [%] unit for easy understanding.

As shown in Table 6 and Fig. 8B, even with the lowest viscosity $\mu$ of 1.3 [cP], the decrease rate R of the 3.0 [$\mu$m] foil was 35.47 [%], the decrease rate R of the 5.0 [$\mu$m] foil was 16.80 [%], and the decrease rate R of the 9.0 [$\mu$m] foil was 10.35 [%]. That is, in all the sintered foils composed of sintered particles having different particle sizes D, the decrease rate R remained at around 35 [%] or less, and the capacitance was relatively stable also in the low viscosity area as a whole. Thus, from the results, the lower limit of the viscosity $\mu$ of the electrolytic solution does not necessarily have to be set in the invention. However, to secure more satisfactory and stable capacitance in use environment in which it is required to handle EMI measure at a high level or the like, in a low viscosity area in which the viscosity $\mu$ is lower than 50 [cP] for example, the electrolytic solution preferably has a certain viscosity $\mu$ or more.

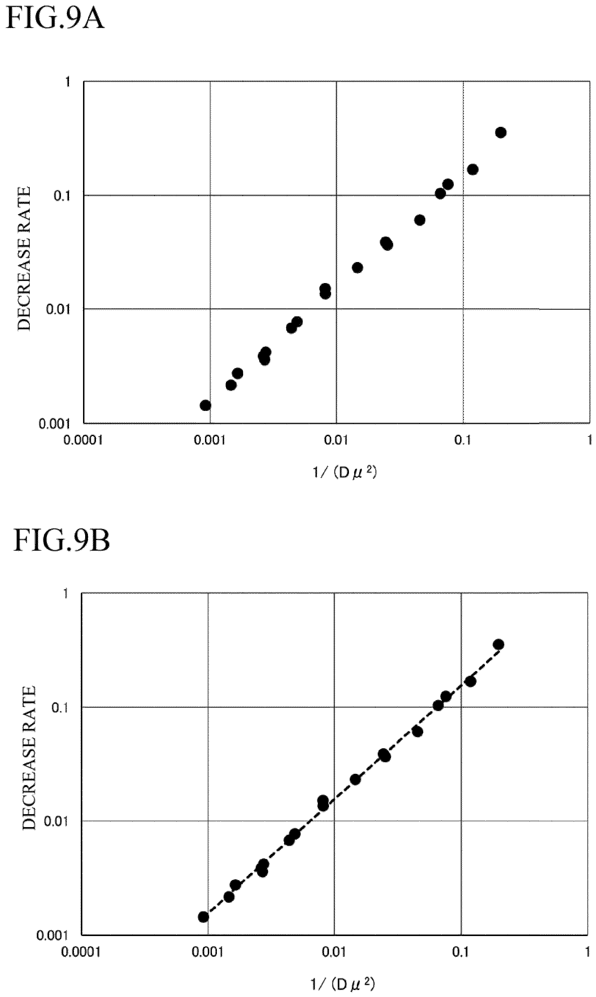

Thus, for the purpose of examining a suitable lower limit of the viscosity $\mu$ based on the points, using Table 6, the values of the relational expression between the value of the particle size D and the value of the viscosity $\mu$: ($1/(D\mu^2)$) were calculated and plotted on the horizontal axis on a log scale, and the values of the decrease rate R corresponding to the D values and the $\mu$ values were plotted on the vertical axis on a log scale. The results are shown in Fig. 9A.

For example, the rightmost plot in Fig. 9A is the plot of the decrease rate R of the 3.0 [$\mu$m] foil at 1.3 [cP], where the value on the horizontal axis is ($1/(D\mu^2)$)$=1/(3.0\times(1.3)^2)=0.1972$, and the value on the vertical axis is 0.3547.

As shown in Fig. 9A, irrespective of the particle size D of the sintered particles (powder particles), namely in all the sintered foils composed of sintered particles having different particle sizes D, the distribution of the decrease rate R almost overlaps with a line with a slope of 1 and is almost in proportion to the relational expression between the value of the particle size D and the value of the viscosity $\mu$: ($1/(\text{particle size } D \times \text{viscosity } \mu^2)$). Thus, setting the regression equation as "$R=A/(D\mu^2)$", the constant of proportionality A is estimated by the method of least squares regarding "$\log R=\log(A/(D\mu^2))$", which is derived by taking logarithms of both sides of the regression equation. Then, the A value which minimizes an objective function: "$S=\Sigma[\log R_i-\log(A/(D_i\mu_i^2))]^2$" (the symbol i is a variable from 1 to N, and the symbol N is the data number) is "$A=(\Pi(R_iD_i\mu_i^2))^{1/N}$", and the estimated value of the constant of proportionality A can be calculated as "the geometric mean of (decrease rate $R \times$ particle size $D \times$ viscosity $\mu^2$)". Here, "$A=RD\mu^2$" is obtained when "$R=A/(D\mu^2)$" is transformed, and also when the geometric mean of ($RD\mu^2$) is regarded as the estimated value of the constant of proportionality A based thereon, the estimated value of the constant of proportionality A can be calculated as "the geometric mean of (decrease rate R × particle size D × viscosity $\mu^2$)" as in the above. When the geometric mean is actually calculated, the estimated value of the constant of proportionality A calculated is 1.552 (rounded off to three decimal places).

As a result, the regression equation: "R=A/(D$\mu^2$)" is expressed by the equation (3) below.

$$R=1.552/(D\mu^2) \quad \cdots(3)$$

Fig. 9B shows a graph in which the calculated regression line: "R=1.552/(D$\mu^2$)" (equation (3)) is shown on the distribution of the decrease rate R shown in Fig. 9A.

According to the equation (3), for example, with a particle size D and a viscosity $\mu$ which satisfy the inequality: "1.552/(D$\mu^2$)≤0.5", the decrease rate R based on the stable capacity is suppressed to around 0.5 (around 50 [%]) or less. Moreover, for example, with a particle size D and a viscosity $\mu$ which satisfy the inequality: "1.552/(D$\mu^2$)≤0.35", the decrease rate R based on the stable capacity is suppressed to around 0.35 (around 35 [%]) or less. Moreover, for example, with a particle size D and a viscosity $\mu$ which satisfy the inequality: "1.552/(D$\mu^2$)≤0.1", the decrease rate R based on the stable capacity is suppressed to around 0.1 (around 10 [%]) or less. Moreover, for example, with a particle size D and a viscosity $\mu$ which satisfy the inequality: "1.552/(D$\mu^2$)≤0.05", the decrease rate R based on the stable capacity is suppressed to around 0.05 (around 5 [%]) or less. Moreover, for example, with a particle size D and a viscosity $\mu$ which satisfy the inequality: "1.552/(D$\mu^2$)≤0.01", the decrease rate R based on the stable capacity is suppressed to around 0.01 (around 1 [%]) or less.

From the above, to secure more satisfactory and stable capacitance in use environment in which it is required to handle EMI measure at a high level or the like, in a low viscosity area in which the viscosity $\mu$ is lower than 50 [cP] for example, the inequality: "1.552/(D$\mu^2$)≤0.5" is preferably satisfied, the inequality: "1.552/(D$\mu^2$)≤0.35" is more preferably satisfied, the inequality: "1.552/(D$\mu^2$)≤0.1" is more preferably satisfied, the inequality: "1.552/(D$\mu^2$)≤0.05" is more preferably satisfied, and the inequality: "1.552/(D$\mu^2$)≤0.01" is more preferably satisfied. Here, the parameters are particularly effective for setting the particle size D of the sintered particles (powder particles) and the viscosity $\mu$ of the electrolytic solution, in an electrolytic capacitor in which a sintered foil is applied, for a case which assumes use environment at a relatively high frequency of 10 [kHz] to 100 [kHz] for example.

## Claims

1. An electrolytic capacitor comprising:

   a capacitor element having an anode foil having a dielectric layer formed thereon, a cathode foil and a separator placed between the anode foil and the cathode foil; and
   an electrolytic solution impregnated in the capacitor element:

   which is **characterized in that**
   the anode foil or the cathode foil is obtained by forming a sintered material of a composition containing a metal powder in a foil form or forming a sintered material film composed of the sintered material on a surface of a base material, and
   the viscosity $\mu$ [cP] of the electrolytic solution at 25°C is 400 cP or less.

2. The electrolytic capacitor according to claim 1

   which is **characterized in that** the particle size D [$\mu$m] of powder particles of the metal powder or sintered particles of the metal powder is 5.0 $\mu$m or less
   (wherein the particle size D means the median diameter at a cumulative value of 50% in a particle size distribution based on volume of the powder particles measured by the laser diffraction-scattering method or the sintered particles measured by observation with a scanning electron microscope).

3. The electrolytic capacitor according to claim 1 or claim 2 which is **characterized in that** the viscosity $\mu$ [cP] of the electrolytic solution at 25°C further satisfies the expression (1) below

$$\mu \leq 9.438D+227 \quad \cdots(1)$$

(wherein D means the particle size D [$\mu$m] of powder particles of the metal powder or sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

4.  A method for producing an electrolytic capacitor having a capacitor element having an anode foil having a dielectric layer formed thereon, a cathode foil and a separator placed between the anode foil and the cathode foil and an electrolytic solution impregnated in the capacitor element:

    which is **characterized in that**
    at least one of the anode foil and the cathode foil is configured by forming a sintered material of a composition containing a metal powder in a foil form or configured by forming a sintered material film composed of the sintered material on a surface of a base material, and
    the viscosity $\mu$ [cP] of the electrolytic solution at 25°C is adjusted to 400 cP or less.

5.  The method for producing an electrolytic capacitor according to claim 4

    which is **characterized in that** the particle size D [$\mu$m] of powder particles of the metal powder or sintered particles of the metal powder is adjusted to 5.0 $\mu$m or less
    (wherein the particle size D means the median diameter at a cumulative value of 50% in a particle size distribution based on volume of the powder particles measured by the laser diffraction-scattering method or the sintered particles measured by observation with a scanning electron microscope).

6.  The method for producing an electrolytic capacitor according to claim 4 or claim 5 which is **characterized in that** the viscosity $\mu$ [cP] of the electrolytic solution at 25°C is adjusted to further satisfy the expression (1) below

$$\mu \leq 9.438D + 227 \quad \cdots (1)$$

    (wherein D means the particle size D [$\mu$m] of powder particles of the metal powder or sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

**Amended claims under Art. 19.1 PCT**

1.  An electrolytic capacitor comprising:

    a capacitor element having an anode foil having a dielectric layer formed thereon, a cathode foil and a separator placed between the anode foil and the cathode foil; and
    an electrolytic solution impregnated in the capacitor element:

    which is **characterized in that**
    the anode foil or the cathode foil is obtained by forming a sintered material of a composition containing a metal powder in a foil form or forming a sintered material film composed of the sintered material on a surface of a base material, and
    the viscosity $\mu$ [cP] of the electrolytic solution at 25°C is 400 cP or less.

2.  The electrolytic capacitor according to claim 1

    which is **characterized in that** the particle size D [$\mu$m] of powder particles of the metal powder or sintered particles of the metal powder is 5.0 $\mu$m or less
    (wherein the particle size D means the median diameter at a cumulative value of 50% in a particle size distribution based on volume of the powder particles measured by the laser diffraction-scattering method or the sintered particles measured by observation with a scanning electron microscope).

3.  (After Amendment) The electrolytic capacitor according to claim 1 which is **characterized in that** the viscosity $\mu$ [cP] of the electrolytic solution at 25°C further satisfies the expression (1) below

$$\mu \leq 9.438D + 227 \quad \cdots(1)$$

(wherein D means the particle size D [μm] of powder particles of the metal powder or sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

4. A method for producing an electrolytic capacitor having a capacitor element having an anode foil having a dielectric layer formed thereon, a cathode foil and a separator placed between the anode foil and the cathode foil and an electrolytic solution impregnated in the capacitor element:

which is **characterized in that**
at least one of the anode foil and the cathode foil is configured by forming a sintered material of a composition containing a metal powder in a foil form or configured by forming a sintered material film composed of the sintered material on a surface of a base material, and
the viscosity μ [cP] of the electrolytic solution at 25°C is adjusted to 400 cP or less.

5. The method for producing an electrolytic capacitor according to claim 4

which is **characterized in that** the particle size D [μm] of powder particles of the metal powder or sintered particles of the metal powder is adjusted to 5.0 μm or less
(wherein the particle size D means the median diameter at a cumulative value of 50% in a particle size distribution based on volume of the powder particles measured by the laser diffraction-scattering method or the sintered particles measured by observation with a scanning electron microscope).

6. The method for producing an electrolytic capacitor according to claim 4 or claim 5 which is **characterized in that** the viscosity μ [cP] of the electrolytic solution at 25°C is adjusted to further satisfy the expression (1) below

$$\mu \leq 9.438D + 227 \quad \cdots(1)$$

(wherein D means the particle size D [μm] of powder particles of the metal powder or sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

7. (Added) The electrolytic capacitor according to claim 2 which is **characterized in that** the viscosity μ [cP] of the electrolytic solution at 25°C further satisfies the expression (1) below

$$\mu \leq 9.438D + 227 \quad \cdots(1)$$

(wherein D means the particle size D [μm] of the powder particles of the metal powder or the sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

8. (Added) The electrolytic capacitor according to claim 1 which is **characterized in that** the viscosity μ [cP] of the electrolytic solution at 25°C further satisfies the expression (2) below

$$\mu \leq 6.726D + 162 \quad \cdots(2)$$

(wherein D means the particle size D [μm] of powder particles of the metal powder or sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

9. (Added) The electrolytic capacitor according to claim 2 which is **characterized in that** the viscosity $\mu$ [cP] of the electrolytic solution at 25°C further satisfies the expression (2) below

$$\mu \leq 6.726D + 162 \quad \cdots (2)$$

(wherein D means the particle size D [$\mu$m] of the powder particles of the metal powder or the sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

10. (Added) The electrolytic capacitor according to claim 2 which is **characterized in that** the expression (3) below is further satisfied when the viscosity $\mu$ [cP] of the electrolytic solution at 25°C is 50 cP or less

$$1.552/(D\mu^2) \leq 0.5 \cdots (3)$$

(wherein D means the particle size D [$\mu$m] of the powder particles of the metal powder or the sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

11. (Added) The electrolytic capacitor according to claim 3 which is **characterized in that** the expression (3) below together with the expression (1) is further satisfied when the viscosity $\mu$ [cP] of the electrolytic solution at 25°C is 50 cP or less

$$1.552/(D\mu^2) \leq 0.5 \cdots (3)$$

(wherein D means the particle size D [$\mu$m] of the powder particles of the metal powder or the sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

12. (Added) The electrolytic capacitor according to claim 7 which is **characterized in that** the expression (3) below together with the expression (1) is further satisfied when the viscosity $\mu$ [cP] of the electrolytic solution at 25°C is 50 cP or less

$$1.552/(D\mu^2) \leq 0.5 \cdots (3)$$

(wherein D means the particle size D [$\mu$m] of the powder particles of the metal powder or the sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

13. (Added) The electrolytic capacitor according to claim 8 which is **characterized in that** the expression (3) below together with the expression (2) is further satisfied when the viscosity $\mu$ [cP] of the electrolytic solution at 25°C is 50 cP or less

$$1.552/(D\mu^2) \leq 0.5 \cdots (3)$$

(wherein D means the particle size D [$\mu$m] of the powder particles of the metal powder or the sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

**14.** (Added) The electrolytic capacitor according to claim 9 which is **characterized in that** the expression (3) below together with the expression (2) is further satisfied when the viscosity $\mu$ [cP] of the electrolytic solution at 25°C is 50 cP or less

$$1.552/(D\mu^2) \leq 0.5 \cdots (3)$$

(wherein D means the particle size D [$\mu$m] of the powder particles of the metal powder or the sintered particles of the metal powder, and the particle size D means the median diameter at a cumulative value of 50% in a particle size distribution based on volume of the powder particles measured by the laser diffraction-scattering method or the sintered particles measured by observation with a scanning electron microscope).

**15.** (Added) The electrolytic capacitor according to claim 1, claim 2, claim 3, claim 7, claim 8, claim 9, claim 10, claim 11, claim 12, claim 13 or claim 14 which is **characterized in that** the viscosity $\mu$ [cP] of the electrolytic solution at 25°C is 2 cP or more.

**16.** (Added) The electrolytic capacitor according to claim 1, claim 2, claim 3, claim 7, claim 8, claim 9, claim 10, claim 11, claim 12, claim 13 or claim 14 which is **characterized in that** the viscosity $\mu$ [cP] of the electrolytic solution at 25°C is 10 cP or more.

**17.** (Added) The electrolytic capacitor according to claim 1, claim 2, claim 3, claim 7, claim 8, claim 9, claim 10, claim 11, claim 12, claim 13 or claim 14 which is **characterized in that** the viscosity $\mu$ [cP] of the electrolytic solution at 25°C is 30 cP or more.

**Statement under Art. 19.1 PCT**

1. Claim 3 was amended into a claim which depends on claim 1 only by changing the dependency of original claim 3, which depends on claim 1 and claim 2.
2. Claim 7 was added as a claim which depends on claim 2 only by changing the dependency of original claim 3, which depends on claim 1 and claim 2.
3. Claims 8 to 17 were added.
4. Bases of Amendments

The amended subject matter of claim 3 is based on the subject matter described in original claim 3.
The added subject matter of claim 7 is based on the subject matter described in original claim 3.
The added subject matters of claims 8 and 9 are based on the subject matters described in paragraph [0048] of the original specification.
The added subject matters of claims 10-14 are based on the subject matters described in paragraph [0096] of the original specification.
The added subject matter of claim 15 is based on the subject matter described in paragraph [0053] of the original specification.
The added subject matter of claim 16 is based on the subject matter described in paragraph [0053] of the original specification.
The added subject matter of claim 17 is based on the subject matter described in paragraph [0053] of the original specification.

FIG.1

## FIG.2A

## FIG.2B

FIG.3A

FIG.3B

FIG.4

FIG.5A

FIG.5B

## FIG.6A

Graph: Y-axis "SUBCRITICAL VISCOSITY VALUE [cP]" (230 to 330), X-axis "PARTICLE SIZE D [μm]" (0 to 10).

$$y = 9.4383x + 227.35$$
$$\fallingdotseq 9.438x + 227$$

## FIG.6B

Graph: Y-axis "CRITICAL VISCOSITY VALUE [cP]" (150 to 250), X-axis "PARTICLE SIZE D [μm]" (0 to 10).

$$y = 6.7263x + 162.03$$
$$\fallingdotseq 6.726x + 162$$

## FIG.7A

## FIG.7B

FIG.8A

FIG.8B

FIG.9A

FIG.9B

# EP 4 535 386 A1

<div align="center">

**INTERNATIONAL SEARCH REPORT**

</div>

| | International application No. |
|---|---|
| | **PCT/JP2023/019881** |

**A. CLASSIFICATION OF SUBJECT MATTER**

***H01G 9/035***(2006.01)i; ***H01G 9/052***(2006.01)i; ***H01G 9/145***(2006.01)i
FI: H01G9/035; H01G9/052 507; H01G9/145

According to International Patent Classification (IPC) or to both national classification and IPC

**B. FIELDS SEARCHED**

Minimum documentation searched (classification system followed by classification symbols)

H01G9/035; H01G9/052; H01G9/145

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-110233 A (NIPPON CHEMICON) 12 July 2018 (2018-07-12)<br>paragraphs [0013], [0023], [0043]-[0044], fig. 1-3 | 1, 4 |
| Y | WO 2013/011881 A1 (TOYO ALUMINIUM KABUSHIKI KAISHA) 24 January 2013 (2013-01-24)<br>paragraphs [0034], [0053]-[0056] | 1-6 |
| Y | JP 2005-303062 A (RUBYCON CORP) 27 October 2005 (2005-10-27)<br>paragraph [0041] | 1-6 |
| Y | JP 05-275286 A (TORAY IND INC) 22 October 1993 (1993-10-22)<br>paragraph [0035] | 1-6 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **22 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/019881**

| Patent document cited in search report | | | Publication date (day/month/year) | Patent family member(s) | | | Publication date (day/month/year) |
|---|---|---|---|---|---|---|---|
| JP | 2018-110233 | A | 12 July 2018 | (Family: none) | | | |
| WO | 2013/011881 | A1 | 24 January 2013 | US | 2014/0211375 | A1 | |
| | | | | paragraphs [0052], [0080]-[0083] | | | |
| | | | | EP | 2733712 | A1 | |
| | | | | CN | 103688327 | A | |
| | | | | KR | 10-2014-0037104 | A | |
| | | | | TW | 201312616 | A | |
| JP | 2005-303062 | A | 27 October 2005 | US | 2007/0121276 | A1 | |
| | | | | paragraph [0040] | | | |
| | | | | WO | 2005/101433 | A1 | |
| | | | | EP | 1760737 | A1 | |
| | | | | TW | 200534310 | A | |
| | | | | CN | 1886811 | A | |
| | | | | KR | 10-2007-0005922 | A | |
| JP | 05-275286 | A | 22 October 1993 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008098279 A